(19) Europäisches Patentamt
European Patent Office
Office européen des brevets

(11) **EP 4 002 539 A1**

(12) **EUROPEAN PATENT APPLICATION**
published in accordance with Art. 153(4) EPC

(43) Date of publication:
**25.05.2022 Bulletin 2022/21**

(21) Application number: **20867854.0**

(22) Date of filing: **22.09.2020**

(51) International Patent Classification (IPC):
*H01M 10/058* [(2010.01)]  *H01M 10/44* [(2006.01)]
*H01M 4/38* [(2006.01)]  *H01M 4/1395* [(2010.01)]
*H01M 4/04* [(2006.01)]  *H01M 4/134* [(2010.01)]
*H01M 10/052* [(2010.01)]  *H01M 10/42* [(2006.01)]

(52) Cooperative Patent Classification (CPC):
Y02E 60/10; Y02P 70/50

(86) International application number:
**PCT/KR2020/012799**

(87) International publication number:
**WO 2021/060811 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2019  KR 20190117069**

(71) Applicant: **LG ENERGY SOLUTION, LTD.**
**Seoul 07335 (KR)**

(72) Inventors:
• **KIM, Young Jae**
  **Daejeon 34122 (KR)**
• **YOO, Jung Woo**
  **Daejeon 34122 (KR)**
• **KIM, Ye Lin**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING SECONDARY BATTERY**

(57)    The present invention provides a method for manufacturing a secondary battery, the method including: forming an electrode assembly including a negative electrode including a silicon-based active material, a positive electrode facing the negative electrode, and a separator interposed between the negative electrode and the positive electrode; impregnating the electrode assembly by injecting an electrolytic solution into the electrode assembly; performing activation through first charging/discharging in at least one cycle while pressurizing the impregnated electrode assembly; allowing the activated electrode assembly to stand at 40°C to 80°C in a state of being charged to of 70% or more; removing a gas generated from the electrode assembly after the standing of the activated electrode assembly; and subjecting the electrode assembly to a second charging/discharging in at least one cycle at 15°C to 30°C after the removing of gas generated from the electrode assembly.

【FIG. 1】

EP 4 002 539 A1

**Description**

[Technical Field]

CROSS-REFERENCE TO RELATED APPLICATION

The present application claims the benefit of priority based on Korean Patent Application No. 10-2019-0117069 dated September 23, 2019, and all the contents disclosed in the literatures of the corresponding Korea patent applications are included as a part of the present specification.

TECHNICAL FIELD

The present invention relates to a method for manufacturing a secondary battery.

[Background Art]

Recently, with the rapid spread of electronic appliances using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte, an organic solvent and the like. Further, for the positive electrode and the negative electrode, an active material layer including a positive electrode active material or a negative electrode active material may be formed on a current collector. In general, lithium-containing metal oxides such as $LiCoO_2$ and $LiMn_2O_4$ have been used as the positive electrode active material for the positive electrode, and lithium-free carbon-based active materials, silicon-based active materials and the like have been used as the negative electrode active material for the negative electrode.

In particular, silicon-based active materials are attracting attention because they have a capacity about 10-fold higher compared to that of carbon-based active materials, and have an advantage of being capable of achieving high energy density even with thin electrodes due to the high capacity. However, the silicon-based active materials have not been universally used for general purposes due to the problems of volume expansion caused by charging and discharging, and cracks in and damage to active material particles caused by the volume expansion, and deterioration in service life characteristics due to the cracks and damage.

Meanwhile, a secondary battery is manufactured through a process of assembling the secondary battery and a process of activating the secondary battery. In this case, the activation may be performed by injecting an electrolytic solution into an assembled secondary battery to impregnate the secondary battery, and charging and discharging the impregnated secondary battery by a charging and discharging device.

By the activation, lithium is intercalated into a negative electrode included in a secondary battery, and an electrolytic solution and a lithium salt react on the surface of the negative electrode to produce compounds such as $Li_2CO_3$, $Li_2O$, and $LiOH$. These compounds form a type of passivation layer on the surface of the negative electrode, and this passivation film is called a solid electrolyte interface layer (hereinafter, referred to as an SEI layer). After the SEI layer is formed, it acts as an ion tunnel to allow lithium ions to pass through, the lithium ions do not cause side reactions with the negative electrode or other materials again, and the amount of charge consumed in the SEI layer is an irreversible capacity, and has a property of not reacting reversibly when discharged. Accordingly, the amount of lithium ions in the electrolyte solution is reversibly maintained without further decomposition of the electrolytic solution by forming the SEI layer, so that stable charging and discharging may be maintained.

In this regard, when an activation process is performed on a negative electrode to which a silicon-based active material is applied, the silicon-based active material has a large volume expansion/contraction due to charging and discharging as described above, so that a new negative electrode surface may be continuously formed due to the breakage of the active material or a deterioration in contact between active materials. Accordingly, an SEI layer production reaction continuously occurs on the surface of a new negative electrode, but excessive SEI layer formation may increase a gas produced during the SEI layer formation reaction, and there are problems in that the local resistance of the negative electrode due to such gas generation is increased and service life characteristics of the battery deteriorate due to the precipitation of lithium.

Therefore, there is a need for developing a negative electrode and a secondary battery, to which a silicon-based active material with improvements in stable formation of an SEI layer, charging and discharging performance, and service life characteristics is applied while implementing the high capacity and high energy density of the silicon-based active material.

KR 10-2017-0074030 relates to a negative electrode active material for a lithium secondary battery, a method for manufacturing the same, and a lithium secondary battery including the same, and discloses a negative electrode active material including a porous silicon-carbon composite, but has a limitation in solving the above-described problems.

[Prior Art Document]

[Patent Document]

KR 10-2017-0074030

[Disclosure]

[Technical Problem]

An object of the present invention is to provide a method for manufacturing a secondary battery showing improved service life characteristics.

[Technical Solution]

The present invention provides a method for manufacturing a secondary battery, the method including: forming an electrode assembly including a negative electrode including a silicon-based active material, a positive electrode facing the negative electrode, and a separator interposed between the negative electrode and the positive electrode; impregnating the electrode assembly by injecting an electrolytic solution into the electrode assembly; performing activation through first charging/discharging in at least one cycle while pressurizing the impregnated electrode assembly; allowing the activated electrode assembly to stand at 40°C to 80°C in a state of being charged to of 70% or more; removing a gas generated from the electrode assembly after the standing of the activated electrode assembly; and subjecting the electrode assembly to a second charging/discharging in at least one cycle at 15°C to 30°C after the removing of the gas generated from the electrode assembly.

[Advantageous Effects]

The method for manufacturing a secondary battery of the present invention can form an SEI layer having stable and excellent strength on a negative electrode by performing charging/discharging for activating an electrode assembly including a silicon-based active material, and then performing a process of allowing the electrode assembly to stand at high temperature, thereby enabling the manufacture of a secondary battery with improved service life performance.

Further, the method for manufacturing a secondary battery of the present invention can generate a large amount of gas due to the acceleration of side reactions caused by residual moisture by performing charging/discharging for activating an electrode assembly including a silicon-based active material, and then performing a process of allowing the electrode assembly to stand at high temperature, and thereafter, the gas is removed by a degassing process. Since the gas generated by the negative electrode side reactions can be removed as much as possible by the standing of the electrode assembly at high temperature, it is preferable for improving the service life performance because the generation of gas can be suppressed when the method is applied to a secondary battery product thereafter.

[Description of Drawings]

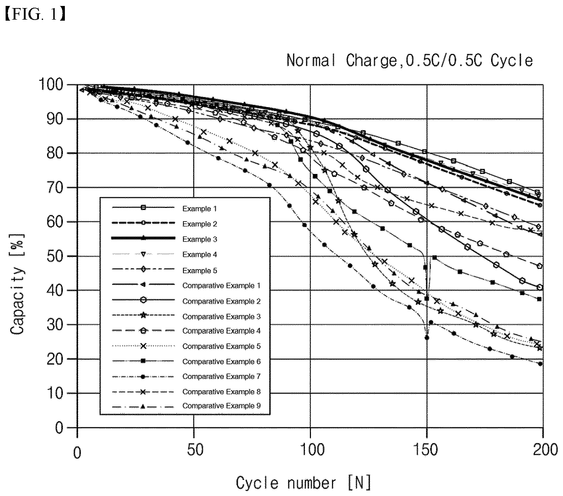

FIG. 1 is a graph in which the capacity retention rates of the secondary batteries of Examples 1 to 5 and Comparative Examples 1 to 9 are evaluated.

[Modes of the Invention]

Terms or words used in the specification and the claims should not be interpreted as being limited to a typical or dictionary meaning and should be interpreted with a meaning and a concept which conform to the technical spirit of the present invention based on the principle that an inventor can appropriately define a concept of a term in order to describe his/her own invention by the best method.

The terms used in the present specification are used only to describe specific embodiments, and are not intended to limit the present invention. Singular expressions include plural expressions unless the singular expressions have definitely opposite meanings in the context.

In the present invention, the term "comprise", "include", or "have" is intended to indicate the presence of the characteristic, number, step, operation, constituent element, or any combination thereof implemented, and should be understood to mean that the presence or addition possibility of one or more other characteristics or numbers, steps, operations, constituent elements, or any combination thereof is not precluded.

In the present specification, an average particle size ($D_{50}$) may be defined as a particle size corresponding to 50% of a cumulative volume in a particle size distribution curve of the particles. The average particle diameter ($D_{50}$) may be measured using, for example, a laser diffraction method. The laser diffraction method can generally measure a particle size of from the submicron region to about several mm, and results with high reproducibility and high resolution may be obtained.

Hereinafter, the present invention will be specifically described.

**<Method for manufacturing secondary battery>**

The present invention relates to a method for manufacturing a secondary battery, and more particularly, to a method for manufacturing a lithium secondary battery.

Specifically, the method for manufacturing a secondary battery includes: forming an electrode assembly including a negative electrode including a silicon-based active material, a positive electrode facing the negative electrode, and a separator interposed between the negative electrode and the positive electrode; impregnating the electrode assembly by injecting an electrolytic solution into the electrode assembly; performing activation through first charging/discharging in at least one cycle while pressurizing the impregnated electrode assembly; allowing the activated electrode assembly to stand at 40°C to 80°C in a state of being charged to a SOC of 70% or more; removing a gas generated from the electrode assembly after the standing of the activated electrode assembly; and subjecting the electrode assembly to second charging/discharging in at least one cycle at 15°C to 30°C after the removing of the gas generated from the electrode assembly.

The method for manufacturing a secondary battery of the present invention can form an SEI layer having stable and excellent strength on the surface of a negative electrode by performing charging/discharging for activating an electrode assembly including a silicon-based active material, and then performing a process of allowing the electrode assembly to stand at high temperature, thereby enabling the manufacture of a secondary battery with improved service life performance.

Further, the method for manufacturing a secondary battery of the present invention can generate a large amount of gas due to the acceleration of side reactions caused by residual moisture by performing charging/discharging for activating an electrode assembly including a silicon-based active material, and then performing a process of allowing the electrode assembly to stand at high temperature, and thereafter, the gas is removed by a degassing process. Since the gas generated by the negative electrode side reactions can be removed as much as possible by the standing of the electrode assembly at high temperature, it is preferable for improving the service life performance because the generation of gas can be suppressed when the method is applied to a secondary battery product thereafter.

<Manufacture of electrode assembly>

The method for manufacturing a secondary battery of the present invention includes: forming an electrode assembly including a negative electrode including a silicon-based active material, a positive electrode facing the negative electrode, and a separator interposed between the negative electrode and the positive electrode.

The negative electrode includes a silicon-based active material. A silicon-based active material has a higher capacity than a carbon-based active material, but has problems of volume expansion/contraction during charging/discharging, cracking of the active material due to the volume expansion/contraction, deterioration in contactability causes an SEI layer to be excessively produced, and gases are generated by side reactions, which may result in the reduction of the service life of the battery. However, in the present invention, since a stable SEI layer can be formed by a process such as activation and standing at a high temperature, which will be described below, the capacity characteristics of the silicon-based active material can be realized and a secondary battery having excellent service life performance can be manufactured.

The negative electrode may include a negative electrode current collector and a negative electrode active material layer formed on the negative electrode current collector, and the negative electrode active material layer may include the silicon-based active material.

The negative electrode current collector is not particularly limited as long as it has high conductivity without causing a chemical change in the battery. Specifically, as the negative electrode current collector, it is possible to use copper, stainless steel, aluminum, nickel, titanium, calcined carbon, copper or stainless steel which is surface-treated with carbon, nickel, titanium, silver, and the like, an aluminum-cadmium alloy, and the like.

The negative electrode current collector may have a thickness of 3 to 500 $\mu$m, preferably 5 to 50 $\mu$m for

implementing a thin film of a silicon-based active material-containing negative electrode, and preferably 7 to 20 $\mu$m.

The negative electrode current collector may also strengthen the binding force of the negative electrode active material by forming fine irregularities on the surface thereof. For example, the negative electrode current collector may be used in various forms such as a film, a sheet, a foil, a net, a porous body, a foam, and a non-woven fabric body.

The silicon-based active material may include a compound represented by $SiO_x$ ($0 \leq x < 2$). Since $SiO_2$ does not react with lithium ions, and thus cannot store lithium, it is preferred that x is within the above range.

Specifically, the silicon-based active material may be Si. In the related art, Si is advantageous in that the capacity is about 2.5 to 3-fold higher than that of a silicon oxide (for example, $SiO_x$ ($0<x<2$)), but the degree of volume expansion/contraction caused by charging/discharging of Si is much higher than that of the silicon oxide, so that it is not easy to commercialize Si. However, in the present invention, since a stable and strong SEI layer can be formed on Si by performing an activation process and a high temperature standing process, a problem of deterioration in service life characteristics may be effectively solved, and advantages of high capacity, energy density, and rate characteristics of Si may be more preferably realized.

The silicon-based active material may have an average particle diameter ($D_{50}$) of 1 $\mu$m to 10 $\mu$m, preferably 1.5 $\mu$m to 4 $\mu$m, in terms of making it easier to more smoothly form a conductive network for securing the structural stability of the active material during charging/discharging and maintaining the electric conductivity, or accessing a binder for binding the active material and the current collector.

The negative electrode active material may be included in an amount of 60 wt% to 90 wt%, preferably 70 wt% to 80 wt% in the negative electrode active material layer, in terms of sufficiently realizing the high capacity of the silicon-based active material in a secondary battery while minimizing the effects of the volume expansion/contraction of the silicon-based active material on the battery.

The negative electrode active material layer may further include a conductive material and/or a binder together with the negative electrode active material.

The binder can be used to improve the adhesion force between the negative electrode active material layer and a negative electrode current collector to be described below, or to improve the cohesive force between the silicon-based active materials.

Specifically, the binder may include at least one selected from the group consisting of styrene butadiene rubber(SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacryl amide (PAM), in terms further improving the electrode adhesion force and imparting sufficient resistance to the volume expansion/contraction of a silicon-based active material.

Preferably, the binder may include at least one selected from the group consisting of polyvinyl alcohol, polyacrylic acid, polyacrylonitrile, and polyacryl amide, preferably polyvinyl alcohol and polyacrylic acid, in terms of the binder having high strength, having excellent resistance to volume expansion/contraction of a silicon-based active material, and prevention of the distortion, warpage, and the like of an electrode by imparting excellent flexibility to the binder. When the binder includes polyvinyl alcohol and polyacrylic acid, the polyvinyl alcohol and polyacrylic acid may be included at a weight ratio of 50:50 to 90:10, preferably 55:45 to 80:20, in the binder, in terms of further improving the above-described effect.

The binder may include hydrogen in the binder, which is substituted with Li, Na, Ca, or the like, in terms of dispersing the binder better in an aqueous solvent such as water and improving a cohesive force by smoothly covering the active material when a slurry for forming a negative electrode active material layer is prepared .

The binder may be included in an amount of 5 wt% to 30 wt%, preferably 10 wt% to 20 wt% in the negative electrode active material layer, and when the amount is within the above range, the volume expansion problem of the active material may be minimized by binding the silicon-based active material better, and simultaneously, the dispersion of the binder may be facilitated, and the coatability and the phase stability of the slurry may be improved, when a slurry for forming the negative electrode active material is prepared.

The conductive material can be used to assist and improve the conductivity of the secondary battery, and is not particularly limited as long as the conductive material has conductivity without causing a chemical change. Specifically, the conductive material may include at least one selected from the group consisting of graphite such as natural graphite or artificial graphite; carbon black such as carbon black, acetylene black, Ketjen black, channel black, furnace black, lamp black, and thermal black; conductive fiber such as carbon fiber and metallic fiber; conductive tubes such as carbon nanotubes; fluoro carbon; metallic powder such as aluminum, and nickel powder; conductive whiskers such as zinc oxide and potassium titanate; conductive metal oxide such as titanium oxide; and polyphenylene derivatives, and preferably, the conductive material may include carbon black in terms of realizing high conductivity.

The conductive material may have a specific surface area of 80 m$^2$/g to 200 m$^2$/g, preferably 100 m$^2$/g to 150 m$^2$/g, in terms of facilitating the dispersion of the conductive material and further improving electric conductivity when a slurry for forming a negative electrode active material layer is prepared.

The conductive material may be included in an amount of 5 wt% to 20 wt%, preferably 7 wt% to 15 wt% in the negative electrode active material layer, and the above range is preferred in terms of forming an excellent conductive network while mitigating an increase in resistance due to the binder.

The negative electrode active material layer may have a thickness of 35 $\mu$m to 50 $\mu$m, preferably 36 $\mu$m to 45 $\mu$m, in terms of implementing a thin film electrode and realizing high energy density.

The negative electrode may be manufactured by coating the negative electrode current collector with a negative electrode slurry including a negative electrode active material and selectively a binder, a conductive material and a solvent for forming a negative electrode slurry, and then drying and rolling.

The solvent for forming a negative electrode slurry may include at least one selected from the group consisting of distilled water, ethanol, methanol, and isopropyl alcohol, preferably distilled water, for example, in terms of facilitating the dispersion of a negative electrode active material, a binder, and/or a conductive material.

The solvent for forming a negative electrode slurry may be included in a negative electrode slurry, such that the concentration of a solid included in a negative electrode active material and selectively a binder and a conductive material is 15 wt% to 45 wt%, preferably 20 wt% to 30 wt%, and more preferably 24 wt% to 27 wt%, in consideration of the viscosity, coatability, dispersibility, and the like of the negative electrode slurry.

The positive electrode faces the negative electrode.

The positive electrode may include a positive electrode current collector, and a positive electrode active material layer formed on the positive electrode current collector.

The positive electrode current collector is not particularly limited as long as it has high conductivity without causing a chemical change in the battery. Specifically, as the positive electrode current collector, it is possible to use copper, stainless steel, aluminum, nickel, titanium, calcined carbon, copper or stainless steel whose surface is surface-treated with carbon, nickel, titanium, silver, and the like, an aluminum-cadmium alloy, and the like.

The positive electrode current collector may have a thickness of typically 3 to 500 $\mu$m.

The positive electrode current collector may also strengthen the binding force of the positive electrode active material by forming fine irregularities on the surface thereof. For example, the positive electrode current collector may be used in various forms such as a film, a sheet, a foil, a net, a porous body, a foam, and a non-woven fabric body.

The positive electrode active material layer may include a positive electrode active material.

The positive electrode active material is a compound enabling reversible intercalation and deintercalation of lithium, and specifically, the positive electrode active material may include a lithium transition metal composite oxide including lithium and including nickel, cobalt, manganese, and aluminum. More specifically, the lithium transition metal composite oxide may include lithium and a transition metal including nickel, cobalt, and manganese.

Specifically, examples of the lithium transition metal composite oxide include a lithium-manganese-based oxide (for example, $LiMnO_2$, $LiMn_2O_4$, and the like), a lithium-cobalt-based oxide (for example, $LiCoO_2$, and the like), a lithium-nickel-based oxide (for example, $LiNiO_2$, and the like), a lithium-nickel-manganese-based oxide (for example, $LiNi_{1-Y}Mn_YO_2$ (here, 0<Y<1), $LiMn_{2-z}Ni_zO_4$ (here, 0 < Z < 2), and the like), a lithium-nickel-cobalt-based oxide (for example, $LiNi_{1-Y1}Co_{Y1}O_2$ (here, 0<Y1<1) and the like), a lithium-manganese-cobalt-based oxide (for example, $LiCo_{1-Y2}Mn_{Y2}O_2$ (here, 0<Y2<1), $LiMn_{2-z1}Co_{z1}O_4$ (here, 0<Z1 < 2), and the like), a lithium-nickel-manganese-cobalt-based oxide (for example, $Li(Ni_pCo_qMn_{r1})O_2$ (here, 0< p < 1, 0 < q < 1, 0 < r1 < 1, p+q+r1=1) or $Li(Ni_{p1}Co_{q1}Mn_{r2})O_4$ (here, 0 < p1 < 2, 0 < q1 < 2, 0 < r2 < 2, p1+q1+r2=2), and the like), or a lithium-nickel-cobalt-transition metal (M) oxide (for example, $Li(Ni_{p2}Co_{q2}Mn_{r3}M_{S2})O_2$ (here, M is selected from the group consisting of Al, Fe, V, Cr, Ti, Ta, Mg, and Mo, p2, q2, r3, and s2 are each an atomic fraction of independent elements, and 0 < p2 < 1, 0 < q2 < 1, 0 < r3 < 1, 0 < s2 < 1, and p2+q2+r3+s2=1), and the like), and the like, and among them, any one or two or more compounds may be included. Among them, in view of enhancing the capacity characteristics and stability of a battery, the lithium transition metal composite oxide may be $LiCoO_2$, $LiMnO_2$, $LiNiO_2$, a lithium nickel-manganese-cobalt oxide (for example, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, or the like), a lithium nickel cobalt aluminum oxide (for example, $Li(Ni_{0.8}Co_{0.15}Al_{0.05})O_2$, and the like), and the like, and in consideration of remarkable improvement effects caused by controlling the type and content ratio of constituent elements forming a lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, and the like, and among them, any one or a mixture of two or more may be used.

The positive electrode active material may be included in an amount of 80 wt% to 99 wt%, preferably 92 wt% to 98.5 wt% in a positive electrode active material layer in consideration of exhibiting a sufficient capacity of the positive electrode active material, and the like.

The positive electrode active material layer may further include a binder and/or a conductive material together with the above-described positive electrode active material.

The binder is a component which assists in the cohesion of an active material, a conductive material, and the like and the cohesion to a current collector, and specifically, may include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, preferably polyvinylidene fluoride.

The binder may be included in an amount of 1 wt% to 20 wt, preferably 1.2 wt% to 10 wt% in the positive electrode active material layer, in terms of sufficiently securing a cohesive force between components such as a positive active material.

The conductive material can be used to assist and improve the conductivity of the secondary battery, and is not particularly limited as long as the conductive material has conductivity without causing a chemical change. Specifically, the conductive material may include at least one selected from the group consisting of graphite such as natural graphite or artificial graphite; carbon black such as carbon black, acetylene black, Ketjen black, channel black, furnace black, lamp black, and thermal black; conductive fiber such as carbon fiber and metallic fiber; conductive tubes such as carbon nanotubes; fluoro carbon; metallic powder such as aluminum, and nickel powder; conductive whiskers such as zinc oxide and potassium titanate; conductive metal oxide such as titanium oxide; and polyphenylene derivatives, and preferably, the conductive material may include carbon black in terms of improving conductivity.

The conductive material may have a specific surface area of 80 m$^2$/g to 200 m$^2$/g, preferably 100 m$^2$/g to 150 m$^2$/g, in terms of facilitating the dispersion of the conductive material and further improving electric conductivity when a slurry for forming a positive electrode active material layer is prepared.

The conductive material may be included in an amount of 1 wt% to 20 wt%, preferably 1.2 wt% to 10 wt% in the positive electrode active material layer, in terms of sufficiently securing electric conductivity.

The positive electrode active material layer may have a thickness of 30 $\mu$m to 400 $\mu$m, preferably 50 $\mu$m to 110 $\mu$m, in consideration of the balance of capacity between the negative electrode and the positive electrode, and in terms of minimizing the effects caused by the volume expansion/contraction of the silicon-based active material in the negative electrode.

The positive electrode may be manufactured by coating the positive electrode current collector with a positive electrode slurry including a positive electrode active material and selectively a binder, a conductive material and a solvent for forming a positive electrode slurry, and then drying and rolling.

The solvent for forming a positive electrode slurry may include an organic solvent such as N-methyl-2-pyrrolidone (NMP), and may be used in an amount to obtain a preferred viscosity when including the positive electrode active material, and selectively, a binder, a conductive material, and the like. For example, the solvent for forming a positive electrode slurry may be included in the positive electrode slurry, such that the concentration of a solid including a positive electrode active material and selectively a binder and a conductive material is 50 wt% to 95wt%, preferably 70 wt% to 90 wt%.

The secondary battery may have an N/P ratio of 1.5 to 3.5, more preferably 1.8 to 2.5, calculated by the following Equation 1.

[Equation 1]

$$\text{N/P ratio} = \text{Discharge capacity per unit area of the negative electrode/Discharge capacity per unit area of the positive electrode.}$$

As used herein, the "discharge capacity per unit area" refers to the discharge capacity per unit area in the first cycle of a negative electrode or positive electrode.

The discharge capacity per unit area of the negative electrode may be obtained by the following method. Specifically, a half-cell is manufactured with a negative electrode sample including a negative electrode active material and a counter electrode (for example, a lithium metal electrode) facing the negative electrode sample. The "discharge capacity of the negative electrode sample per unit weight of the negative electrode active material" is obtained by dividing a discharge capacity measured by charging and discharging the half-cell by the weight of the negative electrode active material. A secondary battery is manufactured with a negative electrode including the same negative electrode active material as the negative electrode active material used in the half-cell and a positive electrode including the positive electrode active material. The discharge capacity per unit area of the negative electrode may be obtained by multiplying the "discharge capacity of the negative electrode sample per unit weight of the negative electrode active material" by the weight of the negative electrode active material included in the secondary battery and dividing the resulting value by the area of the negative electrode included in the secondary battery.

The discharge capacity per unit area of the positive electrode may be obtained by the following method. Specifically, a half-cell is manufactured with a positive electrode sample including a positive electrode active material and a counter electrode (for example, a lithium metal electrode) facing the positive electrode sample. The "discharge capacity of the positive electrode sample per unit weight of the positive electrode active material" is obtained by dividing a discharge capacity measured by charging and discharging the half-cell by the weight of the positive electrode active material. A secondary battery is manufactured with a positive electrode including the same positive electrode active material as the positive electrode active material used in the half-cell and a negative electrode including the negative electrode active material. The discharge capacity per unit area of the positive electrode may be obtained by multiplying the "discharge capacity of the positive electrode sample per unit weight of the positive electrode active material" by the weight of the positive electrode active material included in the secondary battery and dividing the resulting value by the area of the positive electrode included in the secondary battery.

When the N/P ratio (ratio of discharge capacitys of the positive electrode and the negative electrode) of the secondary battery of the present invention is adjusted within the above range, the discharge capacity of the negative electrode is designed to be larger than the discharge capacity of the positive electrode by a specific level, and when lithium from the positive electrode is intercalated into the negative electrode, the ratio of the lithium to the total silicon-based active material in the negative electrode may be reduced. Thus, the ratio of the silicon-based active material used in the negative electrode may be reduced to a specific level, thereby minimizing the deterioration in the service life characteristics due to the volume expansion at the negative electrode at the level of the entire battery. Further, as the N/P ratio is adjusted to the above-described level, the deterioration in the service life characteristics of the battery due to the above-described volume expansion can be minimized, and simultaneously, a secondary battery having high energy density, rate characteristics and capacity characteristics due to the silicon-based active material can be realized.

The separator separates the negative electrode and the positive electrode and provides a passage for movement of lithium ions, and is not particularly limited as long as the separator is typically used as a separator in a lithium secondary battery, and in particular, it is preferred that the separator has low resistance to the ionic movement of an electrolyte and has an excellent electrolyte solution impregnation ability. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used in a single-layered or multi-layered structure.

<Impregnation of electrode assembly>

The present invention includes impregnating the electrode assembly by injecting an electrolyte solution into the electrode assembly. By impregnating the electrode assembly with the electrolyte solution, the electrode assembly may be activated by charging and discharging to be described below.

The electrolyte solution may include an organic solvent and a lithium salt.

The organic solvent is not particularly limited as long as the organic solvent can act as a medium through which ions involved in the electrochemical reaction of the battery can move. Specifically, as the organic solvent, it is possible to use an ester-based solvent such as methyl acetate, ethyl acetate, gamma-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethyl methyl carbonate (EMC), ethylene carbonate (EC), propylene carbonate (PC), and fluoroethylene carbonate (FEC); an alcohol-based solvent such as ethyl alcohol and isopropyl alcohol; nitriles such as R-CN (R is a C2 to C20 linear, branched or cyclic structured hydrocarbon group, and may include a double bond aromatic ring or an ether bond); amides such as dimethylformamide; dioxolanes such as 1,3-dioxolane; or sulfolanes, and the like. Among them, a carbonate-based solvent is preferred, and a mixture of a cyclic carbonate having high ionic conductivity and a high dielectric constant (for example, ethylene carbonate, propylene carbonate, fluoroethylene carbonate, and the like) capable of enhancing the charging and discharging performance of the battery and a linear carbonate-based compound having low viscosity (for example, ethyl methyl carbonate, dimethyl carbonate, diethyl carbonate, and the like) is more preferred. In this case, the performance of the electrolyte solution may be excellent when a cyclic carbonate and a linear carbonate are mixed and used at a volume ratio of about 1 : 9 to about 5 : 5. More preferably, it is preferred to mix fluoroethylene carbonate as the cyclic carbonate and diethyl carbonate as the linear carbonate from the viewpoint of improving electrolyte solution performance.

The lithium salt is not particularly limited as long as the lithium salt is a compound capable of providing lithium ions used in a lithium secondary battery. Specifically, as the lithium salt, it is possible to use $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, and the like. It is desirable to use the lithium salt within a concentration range of 0.1 to 2.0 M. When the concentration of the lithium salt is included within the above range, the electrolyte has appropriate conductivity and viscosity, so that excellent electrolyte performance may be exhibited, and lithium ions may move effectively.

The electrolyte solution may further include an additive for forming a stable and flexible SEI layer on a negative electrode using a silicon-based active material. Specifically, the additive may include at least one selected from the group consisting of vinylene carbonate (VC), polystyrene (PS), succinonitrile, ethylene glycol bis(propionitrile) ether, and lithium bis(fluorosulfonyl)imide, preferably vinylene carbonate in terms of easily and stably forming an SEI layer may be through ring opening polymerization.

The additive may be included in an amount of 0.1 wt% to 15 wt%, preferably 0.5 wt% to 5 wt% in the electrolyte solution.

The impregnating of the electrode assembly may be performed for 12 hours to 48 hours, more preferably, 18 hours to 30 hours, in terms of sufficiently wetting the electrode assembly with the electrolyte solution, and more smoothly performing activation caused by the charging and discharging of the electrode assembly.

The impregnating of the electrode assembly may be performed at 15°C to 30°C, more specifically, 23°C to 27°C, and the above range is preferred because the impregnability of the electrode assembly may be improved, and it is possible to prevent the formation of dendrites in the negative electrode caused by an excessive increase in temperature, and to prevent concerns about the generation of low voltage caused by the formation of dendrites.

<First charging/discharging>

The present invention includes activating the impregnated electrode assembly by performing first charging/discharging in at least one cycle while pressurizing the impregnated electrode assembly.

The first charging/discharging may be performed using an electrochemical charger/di scharger.

Charging and discharging (first charging/discharging) for activating the electrode assembly may be performed in preferably 2 or more cycles, more preferably 2 to 8 cycles, and even more preferably 3 to 5 cycles. In general, in the case of the silicon-based active material, the degree of volume expansion/contraction caused by charging and discharging is larger than that of the carbon-based active material, and accordingly, a new negative electrode surface may be generated due to the structural change in the silicon-based active material. Accordingly, it is preferred to charge and discharge the electrode assembly within the above range, such that the SEI layer by activation is sufficiently formed on the surface of the newly formed negative electrode.

The voltage range in which the charging and discharging are performed may be appropriately set in consideration of the type of positive electrode or positive electrode active material used to face the negative electrode. Specifically, in the activation step, the charging and discharging may be performed in a voltage range of 2.5 V to 4.35 V. More specifically, the positive electrode includes a positive electrode current collector and a positive electrode active material layer formed on the positive electrode current collector, the positive electrode active material layer may include a positive electrode active material including a lithium-nickel-cobalt-manganese-based composite oxide, and the charging and discharging may be performed in a voltage range of 2.5 V to 4.2 V, preferably 3 V to 4.2 V, in the activation step. Further, the positive electrode active material layer may include a positive electrode active material including a lithium-cobalt-based oxide, and the charging and discharging may be performed in a voltage range of 3 V to 4.35 V in the activation step.

The first charging/discharging may be performed at 10°C to 80°C. Preferably, the first charging/discharging may be performed at 15°C to 40°C, more preferably 23°C to 30°C, in terms of preventing excessive volume expansion/contraction during the first charging/discharging and preventing continuous production of the SEI layer.

The first charging/discharging is performed while pressurizing the impregnated electrode assembly. While lithium is intercalated into and deintercalated from the silicon-based active material by the first charging/discharging, the volume expansion/contraction of the negative electrode active material is performed, and in this case, the volume expansion of the negative electrode active material may be controlled by performing the pressurizing step together. Furthermore, when charging and discharging processes are performed while pressurizing the electrode assembly, the voids of the negative electrode or the negative electrode active material layer can be realized at a suitable level, the void reduction due to excessive pressurization may be prevented and a problem in which the electrolyte solution is depleted may be solved as the voids are reduced, so that it is preferable for improving service life characteristics.

The pressurization in the first charging/discharging may be performed at 1.5 MPa to 3.5 MPa, preferably 2 MPa to 3 MPa. When the pressurization is performed within the above pressure range, the voids of the negative electrode may be maintained at an appropriate level while sufficiently controlling the volume expansion of the silicon-based active material, so that the service life characteristics of the battery may be further improved.

<High temperature standing step>

The present invention includes allowing the activated electrode assembly to stand at 40°C to 80°C in a state of being charged to a SOC of 70% or higher.

The method for manufacturing a secondary battery of the present invention enables a stable and strong SEI layer to be formed on the surface of the negative electrode by including allowing the electrode assembly activated by the first charging/discharging to stand at a high temperature of 40°C to 80°C. In addition, the SEI layer may be stably formed on a new negative electrode surface, which is formed by the volume expansion/contraction of the silicon-based active material due to the first charging/discharging by the high temperature standing. Further, when the high temperature standing step is performed, the gas in the SEI layer may be released to the outside of the SEI layer by enhancing the movement of the gas generated at the initial stage of activation, which is preferred because the density of the SEI layer may be increased. If the high temperature standing step is not performed, there is a concern that gas remains in the SEI layer, so that there is a risk that the SEI layer may not be firmly and stably formed.

In addition, the method for manufacturing a secondary battery of the present invention can generate a large amount of gas due to the acceleration of side reactions caused by residual moisture by performing charging/discharging for activating an electrode assembly including a silicon-based active material, and then performing a process of allowing the electrode assembly to stand at high temperature, and thereafter, the gas is removed by a degassing process. Since the gas generated by the negative electrode side reactions can be removed as much as possible by the standing of the electrode assembly at high temperature, it is preferable for improving the service life performance because the generation of gas can be suppressed when the method is applied to a secondary battery product thereafter.

The standing step is performed in a state in which the electrode assembly is charged to a SOC of 70% or more (70% to 100%). When the electrode assembly is charged in the above range, the standing is performed in a state in which the volume of the silicon-based active material is expanded, so that it is preferable for a stable SEI layer to be formed in that side reactions which may occur in the active material may be generated in advance. If the standing is performed in a state in which the electrode assembly is charged at a SOC of less than 70%, the volume of the silicon-based active material may not be sufficiently expanded, which is not preferred from the viewpoint that the reaction surface area is not sufficient.

The standing step is performed at 40°C to 80°C. When the standing step is performed at a temperature less than 40°C, it is difficult to stably form the SEI layer, it is not possible to sufficiently generate gas due to a side reaction in the standing step, and the removal of the gas in the SEI layer is not sufficient, which is not preferred. When the standing step is performed at a temperature higher than 80°C, there is a risk of metal elution by increasing the reactivity of the metal in the negative electrode current collector, and the probability of low-voltage generation is high due to the formation of dendrites and the like of the metal, which is not preferred, and during the standing at high temperature, the adhesion force of the binder is reduced to induce the detachment of the electrodes, and an increase in resistance due to an increase in the distance between active materials and a decrease in service life performance due to local lithium precipitation may be generated.

Preferably, the standing step may be performed at 50°C to 70°C. Within the above range, the viscosity of the electrolyte solution is reduced, so that gas generation due to side reactions may be accelerated, and thereafter, as much gas as possible may be removed in the subsequent degassing step. Furthermore, within the above range, the movement of the gas is activated, the gas entrapment phenomenon in the SEI layer may be prevented, and the gas may be easily released to the outside, which is preferred.

The standing step may be performed for 12 hours to 36 hours, preferably 18 hours to 30 hours, and the elution of metal in the negative electrode current collector, dendrite generation, and the like may be prevented while sufficient gas generation occurs due to high temperature standing, which is preferred.

<Degassing>

The present invention includes removing a gas generated from the electrode assembly after the standing step.

By the gas removal step, gas may be generated as a byproduct due to the production of the SEI layer after the activation of the electrode assembly, the generation of the irreversible capacity, and the like. Accordingly, a process of removing byproducts can be performed for the use of the activated secondary battery, and the secondary battery may be manufactured in a usable form through the gas removal step.

In particular, according to the present invention, the gas generated by acceleration by the above-described high temperature standing step can be removed by the gas removal step, and gas generation may be suppressed when the secondary battery product is applied, and the service life performance of the battery may be improved.

For the removing of the gas, the methods generally used in the field of secondary batteries may be performed without limitation. For example, the removing of the gas may be performed by a method of partially opening an electrode assembly to remove the gas and sealing the electrode assembly in a vacuum state.

<Second charging/discharging>

The present invention includes performing second charging/discharging on the electrode assembly at 15°C to 30°C in at least one cycle after the removing of the gas generated from the electrode assembly.

The second charging/discharging step may be performed for uniform and firm formation of the SEI layer after the first charging/discharging step. Specifically, after the side reaction gas formed in the first charging/discharging is removed by the gas removal step, the gas is removed through the second charging/discharging step, and an SEI layer may be formed in the remaining local site. Therefore, when the first charging/discharging step and the second charging/discharging step are performed, the SEI layer in the negative electrode may be formed more uniformly and firmly.

The second charging/discharging step is performed at 15°C to 30°C, preferably 23°C to 27°C. When the second charging/discharging step is performed at a temperature higher than 30°C, there is a concern that the service life performance of the cell may deteriorate due to excessive generation of gas from the electrolyte solution in the second charging/discharging, and when the second charging/discharging step is performed at a temperature less than 15°C, there is a concern that due to an increase in viscosity of the electrolyte solution, resistance may increase and lithium precipitation may occur at a local site, which is not preferred.

The second charging/discharging step may be performed while pressurizing the electrode assembly. By performing the second charging/discharging while pressurizing the electrode assembly, the volume expansion of the negative electrode active material can be easily controlled, which is advantageous for improving the service life characteristics. Pressurization in the second charging/discharging stage can be performed at 1.5 MPa to 3.5 MPa, preferably 2 MPa to 3 MPa, and within the above range, the voids of the negative electrode may be maintained at an appropriate level while sufficiently controlling the volume expansion of the negative electrode active material, which is preferred.

A secondary battery manufactured by the method for manufacturing a secondary battery of the present invention is useful for the fields of portable devices such as mobile phones, notebook-sized computers, and digital cameras and electric vehicles such as hybrid electric vehicles (HEVs), and may be preferably used as particularly, a constituent battery of a medium-sized and large-sized battery module. Therefore, the present invention also provides a medium-sized and large-sized battery module including the aforementioned secondary battery as a unit battery.

Such medium-sized and large-sized battery modules may be preferably applied to power sources which require high output and large capacity, such as electric vehicles, hybrid electric vehicles, and electric power storage devices.

Hereinafter, the Examples of the present invention will be described in detail such that a person skilled in the art to which the present invention pertains can easily carry out the present invention. However, the present invention can be implemented in various different forms, and is not limited to the Examples described herein.

## Examples

### Example 1: Manufacture of secondary battery

<Manufacture of electrode assembly>

1. Manufacture of negative electrode

A negative electrode slurry was prepared by adding a silicon-based active material Si (average particle diameter ($D_{50}$): 3 $\mu$m), carbon black (product name: Super C65, manufacturer: TIMCAL) as a negative electrode conductive material, and a mixture (weight average molecular weight: about 360,000 g/mol) in which polyvinyl alcohol and polyacrylic acid were mixed at a weight ratio of 66:34 as a negative electrode binder to a solvent (water) for forming a negative electrode slurry and mixing the resulting mixture (the solid content was 25 wt% based on the total weight of the negative electrode slurry). The silicon-based active material, the negative electrode conductive material, and the negative electrode binder were mixed at a weight ratio of 75:10:15.

One surface of a copper current collector (thickness: 8 $\mu$m) as a negative electrode current collector was coated with the negative electrode slurry in a loading amount of 68.4 mg/25 cm$^2$, and the copper current collector was roll-pressed and dried in a vacuum oven at 130°C for 10 hours to form a negative electrode active material layer (thickness: 44 $\mu$m), which was employed as a negative electrode (thickness of the negative electrode: 52 $\mu$m).

2. Manufacture of positive electrode

A positive electrode slurry was prepared by adding $LiNi_{0.6}Co_{0.2}Mn_{0.2}O_2$ (average particle diameter ($D_{50}$): 10 $\mu$m) as a positive electrode active material, carbon black (product name: Super C65, manufacturer: TIMCAL) as a positive electrode conductive material, and polyvinylidene fluoride (PVdF) at a weight ratio of 97:1.5:1.5 to an N-methylpyrrolidone (NMP) solvent and mixing the resulting mixture. One surface of an aluminum current collector (thickness: 12 $\mu$m) as a positive electrode current collector was coated with the positive electrode slurry in a loading amount of 459.4 mg/25 cm$^2$, and the aluminum current collector was roll-pressed and dried in a vacuum oven at 130°C for 10 hours to form a positive electrode active material layer (thickness: 110 $\mu$m), which was employed as a positive electrode (thickness of the positive electrode: 122 $\mu$m).

3. Manufacture of electrode assembly

An electrode assembly was manufactured by disposing the negative electrode and the positive electrode manufactured above to face each other, and interposing a separator (thickness: 17.5 $\mu$m) having a laminated structure of an ethylene polymer (PE)/a propylene polymer (PP)/an ethylene polymer (PE) between the negative electrode and the positive electrode, and the electrode assembly was accommodated in a pouch.

4. N/P ratio

A negative electrode sample was prepared by cutting the negative electrode manufactured above to a certain size. A lithium metal electrode having the same size as the negative electrode sample was prepared, and the lithium metal electrode was allowed to face the negative electrode sample. A coin-type half-cell was manufactured by interposing a separator between the negative electrode sample and the lithium metal electrode, and then injecting an electrolyte solution thereinto. As the electrolyte solution, a solution obtained by adding LiPF$_6$ as a lithium salt at a concentration of 1 M to an organic solvent in which ethylene carbonate and ethyl methyl carbonate were mixed at a volume ratio of 50:50 was used. A discharge capacity obtained by charging/discharging the coin-type half-cell at 0.1 C was divided by a weight of a silicon-based active material included in a negative electrode sample to calculate the discharge capacity of the negative electrode sample per unit weight of the silicon-based active material.

Further, a positive electrode sample was prepared by cutting the positive electrode manufactured above to a certain size. A lithium metal electrode having the same size as the positive electrode sample was prepared, and the lithium metal electrode was allowed to face the positive electrode sample. A coin-type half-cell was manufactured by interposing a separator between the positive electrode sample and the lithium metal electrode, and then injecting an electrolyte solution thereinto. As the electrolyte solution, a solution obtained by adding LiPF$_6$ as a lithium salt at a concentration of 1 M to an organic solvent in which ethylene carbonate and ethyl methyl carbonate were mixed at a volume ratio of 50:50 was used. A discharge capacity obtained by charging/discharging the coin-type half-cell at 0.1 C was divided by a weight of a positive electrode active material included in a positive electrode sample to calculate the discharge capacity of the positive electrode sample per unit weight of the positive electrode active material.

A discharge capacity of the negative electrode sample per unit weight of the negative electrode active material measured above was multiplied by a weight of a silicon-based active material and divided by an area of a negative electrode to obtain the discharge capacity per unit area of the negative electrode. In addition, a discharge capacity of the positive electrode sample per unit weight of the positive electrode active material was multiplied by a weight of a positive electrode active material and divided by an area of a positive electrode to obtain the discharge capacity per unit area of the positive electrode.

The discharge capacity per unit area of the negative electrode was divided by the discharge capacity per unit area of the positive electrode to obtain an N/P ratio (= 2).

<Impregnation of electrode assembly>

The electrolyte solution was injected into the pouch to impregnate the electrode assembly.

As the electrolyte solution, a solution obtained by adding 3 wt% of a vinylene carbonate (VC) additive based on the total weight of the electrolyte solution to an organic solvent in which fluoroethylene carbonate (FEC) and diethyl carbonate (DEC) were mixed at a volume ratio of 30:70 and adding LiPF$_6$ as a lithium salt at a concentration of 1 M thereto was used.

The temperature during the impregnation of the electrode assembly was 25°C, and the impregnation was performed for 24 hours.

<First charging/discharging>

The impregnated electrode assembly manufactured above was disposed between a pair of pressure plates, and the electrode assembly was activated by performing the first charging/discharging while pressurizing the electrode assembly at a pressure of 2.5 MPa using a torque wrench.

For the first charging/discharging, the electrode assembly was activated by performing three cycles of charging and discharging at 25°C using an electrochemical charger/discharger (manufacturer: PNE Solution).

The charging and discharging were performed under the following conditions.

Charging conditions: 0.2 C, CC/CV (4.2 V, 0.05 C cut-off)
Discharging conditions: 0.2 C, CC (3.0 V cut-off)

<Standing>

The electrode assembly for which the first charging/discharging was completed was allowed to stand at 60°C for 24 hours in a fully charged state.

<Degassing>

A gas removal process was performed on the electrode assembly for which the standing was completed.

<Second charging/discharging>

The electrode assembly on which the gas removal process was performed was disposed between a pair of pressure plates, and a cycle of second charging/discharging was performed under the following charging and discharging conditions at a temperature of 25°C while pressurizing the electrode assembly at a pressure of 2.5 MPa using a torque wrench. The electrode assembly for which the second charging/discharging was completed was employed as a secondary battery of Example 1.

Charging conditions: 0.33 C, CC/CV (4.2 V, 0.05 C cut-off)
Discharging conditions: 0.33 C, CC (3.0 V cut-off)

**Example 2: Manufacture of secondary battery**

A secondary battery of Example 2 was manufactured in the same manner as in Example 1, except that the first activation was performed at 45°C.

**Example 3: Manufacture of secondary battery**

A secondary battery of Example 3 was manufactured in the same manner as in Example 1, except that the first charging/discharging and the second charging/discharging were performed while pressurizing the electrode assembly at a pressure of 1.87 MPa.

**Example 4: Manufacture of secondary battery**

A secondary battery of Example 4 was manufactured in the same manner as in Example 1, except that the first charging/discharging and the second charging/discharging were performed while pressurizing the electrode assembly at a pressure of 3.12 MPa.

**Example 5: Manufacture of secondary battery**

A secondary battery of Example 5 was manufactured in the same manner as in Example 1, except that only one cycle of the first charging/discharging was performed.

**Comparative Example 1: Manufacture of secondary battery**

A secondary battery of Comparative Example 1 was manufactured in the same manner as in Example 1, except that the standing step was performed at 25°C.

**Comparative Example 2: Manufacture of secondary battery**

A secondary battery of Comparative Example 2 was manufactured in the same manner as in Example 2, except that the standing step was performed at 25°C.

**Comparative Example 3: Manufacture of secondary battery**

A secondary battery of Comparative Example 3 was manufactured in the same manner as in Example 1, except that the standing step was performed at 25°C and the second charging/discharging was performed at 45°C.

**Comparative Example 4: Manufacture of secondary battery**

A secondary battery of Comparative Example 4 was manufactured in the same manner as in Example 2, except that the standing step was performed at 25°C and the second charging/discharging was performed at 45°C.

**Comparative Example 5: Manufacture of secondary battery**

A secondary battery of Comparative Example 5 was manufactured in the same manner as in Example 1, except that the second charging/discharging was performed at 45°C.

**Comparative Example 6: Manufacture of secondary battery**

A secondary battery of Comparative Example 6 was manufactured in the same manner as in Example 2, except that the second charging/discharging was performed at 45°C.

**Comparative Example 7: Manufacture of secondary battery**

A secondary battery of Comparative Example 7 was manufactured in the same manner as in Example 1, except that the second charging/discharging was performed at 10°C.

**Comparative Example 8: Manufacture of secondary battery**

A secondary battery of Comparative Example 8 was manufactured in the same manner as in Example 1, except that the standing step was performed at 90°C.

**Comparative Example 9: Manufacture of secondary battery**

A secondary battery of Comparative Example 9 was manufactured in the same manner as in Example 1, except that the pressurization process was not performed in performing the first charging/discharging and the second charging/discharging.

**<Experimental Example 1> Evaluation of service life characteristics**

The capacity retention rates of the secondary batteries manufactured in Examples 1 to 5 and Comparative Examples 1 to 9 were evaluated using an electrochemical charger/discharger.
The secondary batteries were charged and discharged up to 200 cycles under the conditions of charging (0.5C CC/CV charging 4.2V 0.05C cut-off) and discharging (0.5 C CC discharging 3.0 V cut-off).
The capacity retention rates were evaluated by the following Equation 2.
FIG. 1 illustrates a capacity retention rate graph according to the cycle. Further, the capacity retention rates in the 200th cycle of Examples and Comparative Examples are shown in the following Table 1.

[Equation 2]

$$\text{Capacity retention rate (\%)} = \{(\text{Discharge capacity at the Nth cycle})/(\text{Discharge capacity at the 1st cycle})\} \times 100$$

(In Equation 2, N is an integer from 1 to 200)

[Table 1]

|  | Capacity retention rate@200cyle(%) |
|---|---|
| Example 1 | 68.0 |
| Example 2 | 64.3 |

(continued)

|  | Capacity retention rate@200cyle(%) |
|---|---|
| Example 3 | 65.6 |
| Example 4 | 66.7 |
| Example 5 | 58.2 |
| Comparative Example 1 | 56.1 |
| Comparative Example 2 | 40.4 |
| Comparative Example 3 | 22.9 |
| Comparative Example 4 | 46.6 |
| Comparative Example 5 | 24.1 |
| Comparative Example 6 | 37.2 |
| Comparative Example 7 | 18.4 |
| Comparative Example 8 | 56.8 |
| Comparative Example 9 | 24.0 |

Referring to Table 1, it can be confirmed that service life characteristics are improved because Examples 1 to 5 show excellent levels of capacity retention rates.

In contrast, in the case of Comparative Example 1 and Comparative Example 2, it can be confirmed that by performing the standing step at low temperature, the gas was not sufficiently removed during the degassing process due to the insufficient gas generation during the activation, and service life performance deteriorates due to the difficulties in forming a stable SEI layer.

Further, it can be confirmed that when the second charging/discharging is performed at a slightly high temperature in Comparative Examples 3, 4, 5, and 6, an excessive side reaction occurs in the negative electrode and service life performance deteriorates.

In addition, it can be confirmed that Comparative Example 7 shows lower service life performance than those of the Examples. In the case of Comparative Example 7, by performing the standing step at a slightly lower temperature, the gas is not sufficiently generated by reaction with the electrolyte solution, so that it is considered that the effect of improving the service life cannot be exhibited because the gas is not sufficiently removed.

Furthermore, it can be confirmed that Comparative Example 8 shows lower service life performance than those of the Examples. In the case of Comparative Example 8, by performing the standing step at high temperature, the adhesion force of the binder is reduced, the electrode is detached, and the like, so that it is considered that the local resistance is increased, lithium is precipitated, and service life performance is reduced.

Further, in the case of Comparative Example 9, it can be confirmed that the volume expansion/contraction of the silicon-based active material cannot be smoothly controlled because the pressurization step is not performed during charging/discharging, and therefore service life performance is sharply reduced.

## Claims

1. A method for manufacturing a secondary battery, the method comprising:

forming an electrode assembly comprising a negative electrode comprising a silicon-based active material, a positive electrode facing the negative electrode, and a separator interposed between the negative electrode and the positive electrode;
impregnating the electrode assembly by injecting an electrolyte solution into the electrode assembly;
activating the impregnated electrode assembly by performing a first charging/discharging in at least one cycle while pressurizing the impregnated electrode assembly;
allowing the activated electrode assembly to stand at 40°C to 80°C in a state of being charged to a SOC of 70% or higher;
removing a gas generated from the electrode assembly after the standing step; and
performing a second charging/discharging on the electrode assembly at 15°C to 30°C in at least one cycle after the removing of gas generated from the electrode assembly.

2. The method of claim 1, wherein the impregnating of the electrode assembly is performed at 15°C to 30°C.

3. The method of claim 1, wherein the impregnating of the electrode assembly is performed for 12 hours to 48 hours.

4. The method of claim 1, wherein the first charging/discharging is performed in two or more cycles.

5. The method of claim 1, wherein the pressurization in the first charging/discharging is performed at 1.5 MPa to 3.5 MPa.

6. The method of claim 1, wherein the second charging/discharging is performed while pressurizing the electrode assembly.

7. The method of claim 1, wherein the standing is performed for 12 hours to 36 hours.

8. The method of claim 1, wherein the silicon-based active material is Si.

9. The method of claim 1, wherein the negative electrode comprises a negative electrode current collector, and a negative electrode active material layer formed on the negative electrode current collector, and
the negative electrode active material layer comprises the silicon-based active material, a binder, and a conductive material.

10. The method of claim 9, wherein the silicon-based negative electrode active material is comprised in an amount of 60 wt% to 90 wt% in the negative electrode active material layer,

the binder is comprised in an amount of 5 wt% to 30 wt% in the negative electrode active material layer, and
the conductive material is comprised in an amount of 5 wt% to 20 wt% in the negative electrode active material layer.

11. The method of claim 9, wherein the negative electrode active material layer has a thickness of 35 $\mu$m to 50 $\mu$m.

12. The method of claim 1, wherein an N/P ratio of the electrode assembly calculated by the following Equation 1 is 1.5 to 3.5:

[Equation 1]

N/P ratio = Discharge capacity per unit area of the negative electrode/Discharge capacity per unit area of the positive electrode.

【FIG. 1】

Normal Charge,0.5C/0.5C Cycle

Legend:
- Example 1
- Example 2
- Example 3
- Example 4
- Example 5
- Comparative Example 1
- Comparative Example 2
- Comparative Example 3
- Comparative Example 4
- Comparative Example 5
- Comparative Example 6
- Comparative Example 7
- Comparative Example 8
- Comparative Example 9

Y-axis: Capacity [%]
X-axis: Cycle number [N]

## INTERNATIONAL SEARCH REPORT

| International application No. |
| --- |
| **PCT/KR2020/012799** |

**A. CLASSIFICATION OF SUBJECT MATTER**

**H01M 10/058**(2010.01)i; **H01M 10/44**(2006.01)i; **H01M 4/38**(2006.01)i; **H01M 4/1395**(2010.01)i; **H01M 4/04**(2006.01)i; **H01M 4/134**(2010.01)i; **H01M 10/052**(2010.01)i; **H01M 10/42**(2006.01)i

According to International Patent Classification (IPC) or to both national classification and IPC

**B. FIELDS SEARCHED**

Minimum documentation searched (classification system followed by classification symbols)

H01M 10/058; H01M 10/052; H01M 10/056; H01M 10/0567; H01M 10/40; H01M 2/02; H01M 4/38; H01M 4/48; H01M 10/44; H01M 4/1395; H01M 4/04; H01M 4/134; H01M 10/42

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 활성화(formation process), 가압(pressurization), 탈기(degassing), 음극 활물질(anode active material), 실리콘(silicon)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2017-0033601 A (LG CHEM, LTD.) 27 March 2017. See claims 1, 5 and 8; and paragraph [0042]. | 1-12 |
| Y | KR 10-2018-0087162 A (LG CHEM, LTD.) 01 August 2018. See claims 1 and 10. | 1-12 |
| Y | KR 10-2014-0024587 A (SAMSUNG SDI CO., LTD.) 03 March 2014. See claim 1; paragraphs [0021] and [0052]-[0055]; example 1; and tables 2 and 3. | 8-12 |
| A | KR 10-2017-0001640 A (LG CHEM, LTD.) 04 January 2017. See claims 1-19. | 1-12 |
| A | JP 2008-004466 A (MATSUSHITA ELECTRIC IND. CO., LTD.) 10 January 2008. See claims 1-7. | 1-12 |

☐ Further documents are listed in the continuation of Box C.      ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 December 2020** | **24 December 2020** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<div align="center">

**INTERNATIONAL SEARCH REPORT**
**Information on patent family members**

</div>

International application No.

**PCT/KR2020/012799**

| Patent document cited in search report | | | Publication date (day/month/year) | Patent family member(s) | | | Publication date (day/month/year) |
|---|---|---|---|---|---|---|---|
| KR | 10-2017-0033601 | A | 27 March 2017 | KR | 10-2045246 | B1 | 15 November 2019 |
| KR | 10-2018-0087162 | A | 01 August 2018 | US | 2019-0074538 | A1 | 07 March 2019 |
| | | | | US | 10629956 | B2 | 21 April 2020 |
| | | | | WO | 2018-135915 | A1 | 26 July 2018 |
| | | | | KR | 10-2069213 | B1 | 22 January 2020 |
| KR | 10-2014-0024587 | A | 03 March 2014 | US | 9478799 | B2 | 25 October 2016 |
| | | | | US | 2014-0050985 | A1 | 20 February 2014 |
| KR | 10-2017-0001640 | A | 04 January 2017 | CN | 107078356 | B | 28 May 2019 |
| | | | | CN | 107078356 | A | 18 August 2017 |
| | | | | EP | 3196970 | A1 | 26 July 2017 |
| | | | | EP | 3196970 | B1 | 24 October 2018 |
| | | | | JP | 2018-518793 | A | 12 July 2018 |
| | | | | JP | 6566584 | B2 | 28 August 2019 |
| | | | | PL | 3196970 | T3 | 28 June 2019 |
| | | | | US | 2018-0123186 | A1 | 03 May 2018 |
| | | | | US | 10418670 | B2 | 17 September 2019 |
| | | | | WO | 2016-209014 | A1 | 29 December 2016 |
| | | | | KR | 10-2007503 | B1 | 05 August 2019 |
| | | | | EP | 3196970 | A4 | 03 January 2018 |
| JP | 2008-004466 | A | 10 January 2008 | None | | | |

Form PCT/ISA/210 (patent family annex) (July 2019)

**EP 4 002 539 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190117069

- KR 1020170074030